# EUROPÄISCHE PATENTSCHRIFT

(11) **EP 3 908 767 B1**
(45) Veröffentlichungstag und Bekanntmachung des Hinweises auf die Patenterteilung: **13.08.2025**
(21) Anmeldenummer: 20700870.7
(22) Anmeldetag: 09.01.2020
(51) Int. Cl.: F16D 65/10, F16D 65/827

(54) **TOPFFÖRMIGER VERBUNDBREMSROTOR FÜR KRAFTFAHRZEUGE, SOWIE HERSTELLUNGSVERFAHREN**
BOWL SHAPED VEHICLE SPLIT BRAKE ROTOR AND ASSEMBLY METHOD
ENSEMBLE DE ROTOR DE FREIN DE VÉHICULE EN FORME DE POT ET PROCÉDÉ DE MANUFACTURE

(30) Priorität: 11.01.2019 DE 102019200261; 22.01.2019 DE 102019200719; 10.09.2019 DE 102019213756
(43) Veröffentlichungstag der Anmeldung: 17.11.2021
(73) Patentinhaber: Continental Automotive Technologies GmbH, 30175 Hannover (DE)
(72) Erfinder: BACH, Uwe, 60488 Frankfurt am Main (DE); METZEN, Hans-Peter, 60488 Frankfurt am Main (DE); SEFO, Ahmed, 60488 Frankfurt am Main (DE); HOFFMANN, Jens, 60488 Frankfurt am Main (DE); RÜFFER, Manfred, 60488 Frankfurt am Main (DE)
(74) Vertreter: Aumovio Corporation
(86) Internationale Anmeldenummer: PCT/EP2020/050368
(87) Internationale Veröffentlichungsnummer: WO 2020/144251

(56) Entgegenhaltungen:
- EP-A2- 1 426 644
- WO-A1-96/41967
- WO-A1-96/41968
- DE-A1- 102015 212 017

## Beschreibung

Die Erfindung betrifft einen topfförmigen Verbundbremstrommel 1 für Kraftfahrzeuge der bevorzugt als mehrstückig aufgebaute Bremstrommel in Mehrwerkstofftechnologie (bspw. Stahl-/Leitbauwerkstoffpaarung - das heißt durch Komponentenpaarung aus differierenden Werkstoffen) aufgebaut erhalten ist. Ein entsprechend mehrstöckig aufgebauter Verbundbremstrommel 1 ist aus mindestens zwei oder mehr Komponenten drehfest zusammengesetzt, und umfasst zumindest eine Befestigungskomponente 2 als Schnittstelle zu einer Radnabe 3. Eine Reibringkomponente 4 umfasst zumindest eine Reibfläche 5, die zur Kooperation mit wenigstens einem drehfest gelagerten Reibbelag 6 geeignet und bestimmt ist. Die Befestigungskomponente 2 und die Reibringkomponente 4 sind ihrerseits drehfest miteinander verbunden.

Aus der DE 10 2009 044 678 B4 geht ein Umformverfahren und ein Umformwerkzeug zur Herstellung einer gebauten Verbundbremstrommel zwecks kaltumformtechnisch gleichzeitiger, formschlüssiger, Einfügung zwischen zwei Bauteilen mittels Pins hervor. Dabei dienen die Pins ausdrücklich als Fixiermittel und gleichzeitig zur Drehhemmung. Zu diesem Zweck verfügt eine Reibringkomponente aus Stahlwerkstoff über Ausnehmungen so dass eine Befestigungskomponente in Form eines Aluminiumschmiedeteil mit Pins gleichzeitig in die korrespondierenden Ausnehmungen formschlüssig sowie kraftschlüssig eingefügt werden kann. In diesem Zusammenhang leidet jeder Pin im Fahrzeugfahrbetrieb unter einer komplex-mehrachsigen Beanspruchung weil die Pins jeweils gleichzeitig sowohl die Bremsdrehmomente als auch und die (mehrheitlich axial gerichteten) Fixierungskräfte zwischen den Komponenten zu übertragen haben, mit der Folge, dass der Leichtmetallwerkstoff einer sehr massiven Scherbeanspruchung unterliegt. Für eine präzise und gleichmäßig aufgeteilte Beanspruchungsverteilung unter sämtlichen Pins ist daher allerhöchste Fertigungspräzision unerlässlich. Die Leistungsfähigkeit der derart aufgebauten Trommelbremse bleibt limitiert, infolge ungleichmäßig aufgeteiltem Tragverhalten bei sehr limitierter Pinanzahl. Denn im Herstellwerkzeug ist der für die Unterbringung der Pin-Pressstempel ausnutzbare Einbauraum mithin durch einen vergleichsweise voluminösen Zentralstempel, zwangsläufig beschränkt. Demgegenüber besteht Bedarf nach einer möglichst unbeschränkten Tragfähigkeit bzw. einem vereinfachten Herstellungsverfahren.

Aus der älteren Patentfamilie gemäß Patentanmeldung DE 10 2019 200 261 A1 derselben Anmelderin geht eine mehrstöckig sowie temperaturfest und auch leicht aufgebaute Verbundbremstrommel hervor, die zwecks gegenseitiger, zueinander drehfest arrangierter Fixierung Ihrer Komponenten über eine besondere Fügeschnittstelle verfügt, die radial fluchtend zu einer Flanschebene arrangiert ist, und wobei gesonderte Fixiermitteln, wie insbesondere mehrere axial und/oder radial gerichtete Befestigungselemente zwecks gegenseitiger Fixierung (Axialrichtung) zwischen den Komponenten vorliegen.

Die nicht gattungsgemäße DE 10 2015 212 017 A1 beschreibt eine aus Komponenten gebaute Nutzfahrzeugbremstrommel, ohne Topf noch Topfform, welche im Mantelbereich axial geteilt verschweißt gefügt vorliegt. Die Bremstrommel umfasst dazu einen zylindrischen Anbringungsabschnitt sowie einen zylindrischen Mantelbereich, ohne dass der Stoffschluss eine örtlich sowie funktional separierte Funktionsauftrennung bei Presspassungsverbund anhand kreisscheibenförmig definierter Befestigungskomponente ermöglichte.

Der vorliegenden Erfindung obliegt die Aufgabe, ein weiterentwickelt verbessertes Herstellverfahren einschließlich eine weiterentwickelt verbesserte Verbundbremstrommel (Sachanspruch Verbundbremstrommel sowie Füge-Umformverfahren zur Herstellung einer Verbundbremstrommel) bereitzustellen, welche über die Leistungsfähigkeit einer etwa gleich dimensionierten Scheibenbremse verfügt, und wobei die Nachteile laut Stand der Technik vermieden sind, indem die Verbundbremstrommel mit Sicherheit, auch unter extremer Temperaturbeanspruchung stabil und ausfallsicher arbeitet, und wobei schließlich ein Herstellverfahren ermöglicht ist, das eine einfache, präzise, dauerfeste sowie arbeitsteilig rationalisierte Produktion über die diversifizierte Wertschöpfungskette bei differierenden Werkstoffbestandteilen erlaubt.

Die hiermit vorgestellte Merkmalskombination laut vorliegender Lösung bezieht sich mit sämtlichen Vorschlägen auch per Referenz auf eine Kombination mit einer nicht vorveröffentlichten grundsätzlichen Gestaltung enthaltend eine Befestigungskomponente 2 und eine Reibringkomponente 4 gemäß der älteren, nicht vorveröffentlichten, Patentanmeldung DE 10 2019 200 261.7 welche einen selbstverstärkend konfigurierten Presspassungverbund 7 anhand einer besonderen Fuge/Schnittstelle 8 zwischen Befestigungskomponente 2 und Reibringkomponente 4 integriert, mit der Konsequenz, dass diesbezügliche Merkmale bzw. Offenbarung unter demselben Zeitrang in beliebiger Kombination per Referenz hiermit in diese neue Offenbarung miteinbezogen sind, mit der besonderen Maßgabe, dass die vorliegende Erfindung keineswegs auf gesonderte Schraubfixiermittel angewiesen ist, weil die gegenseitige Fixierung zwischen Reibringkomponente 4 und Befestigungskomponente 2 mittels Umformung und folglich per Formschluss mit einer Hinterschneidung, also durch ein-, um-, über- oder hinter griff bspw. von einer Kavität anhand der besonders gestalteten Schnittstelle zwischen Befestigungskomponente und Reibringkomponente dargestellt ist.

Die Erfindung beinhaltet des Weiteren eine Aufgabentrennung zwischen Mittel und Merkmalen zur gegenseitigen Komponentenfixierung, und zwischen Mittel und Merkmalen zur gegenseitigen Drehmomentübertragung zwischen den Komponenten. Die Erfindung beinhaltet zwischen den beteiligten Komponenten eine wärmeableitend gestaltete Fuge 8, so dass die Befestigungskomponente 2 gezielt als Wärmesenke für die Reibringkomponente 4 zur Verfügung steht, und wobei andererseits zwischen den Komponenten 2,4 einstückig integriert definiert mindestens ein Fixiermittel derart vorliegt, so dass dies Fixiermittel im Wesentlichen ausschließlich (Nennbeanspruchung) eine Fixierfunktion mit gegenseitigem Formschluss sowie mit radial gerichtetem Übergriff von mindestens einer Hinterschneidung wahrnimmt, und wobei zwecks Drehhemmung zwischen Befestigungskomponente 2 und Reibringkomponente 4, mit Versatz neben diesem Fixiermittel, gesondert, der Presspassungsverbund 7 definiert ist. Erfindungsgemäß ist folglich eine selbständige sowie integrierte Fixiermittelfunktion vorgesehen, die eine Fügeumformung von Befestigungskomponente 2 und/oder der Reibringkomponente 4 nach deren Zusammenbau definiert und wobei jedes Fixiermittel im Wesentlichen ausschließlich (Nennauslegung) eine Fixierfunktion per gegenseitigem Formschluss erfüllt. Demzufolge ist ein erfindungsgemäßes Fixiermittel ganz generell von nachteiliger Komplexbeanspruchung freigestellt, weil es - jedenfalls für seine Nennauslegung - von Drehmomentübertragungsaufgaben entlastet ist. Denn zur Drehhemmung dient der nebengeordnete, gesondert zwischen Befestigungskomponente 2 und Reibringkomponente 4 definierte, Presspassungsverbund 7 als gegenseitig kraftschlüssig arrangierte Drehmomentübertragungskomponente. Demzufolge ist die erfindungsgemäße Lösung besonders funktionsgerecht, fertigungsgerecht wie auch beanspruchungsgerecht formuliert.

Die Erfindung umfasst weiterhin wenigstens ein entsprechend abgestimmtes Herstellverfahren, das anhand mehrerer zeitlich nacheinander gestaffelter Verfahrensschritte einen neuartigen Paarung- sowie Fügeumformprozess beinhaltet. Dabei werden die Befestigungskomponente 2 und die Wandkomponente 4 zunächst per Presspassungsverbund 7 miteinander gepaart. Dies erfolgt verzugsweise durch in Axialrichtung Axa gerichtetes Einpressen der Befestigungskomponente 2 in die Reibringkomponente 4 bzw. umgekehrt. Die umformtechnisch dargestellte Fixierung erfolgt erst danach, gesondert und deren Wirkrichtung ist weitestgehend orthogonal quer zur Axialrichtung Ax gerichtet. Die Fixierung erfolgt im Anschluss an den Einpressvorgang, also zeitlich nachgelagert nachdem die Drehhemmung bereits sichergestellt worden ist. Die Erfindung wird weiterhin gemeinsam mit der Figurenbeschreibung in Bezug auf die bevorzugten Ausführungsbeispiele wie folgt näher erläutert. In der Zeichnung zeigt dabei zumeist schematisch sowie vielfach vergrößert:
Fig. 1 Prinzip (Verbundbremstrommel + Herstellverfahren mit Prozessschritt I,II) einer bevorzugten erste Ausführung mit trommelaußen, stirnseitig von radial innen nach radial außen (auswärts) gerichtet mit Raumwinkel α allokierter Deformationszone (Einzelheit X) an einer Befestigungskomponente 2, sowie mit Werkzeug 12 Fig. 1 A, B, C in Draufsicht vergrößert ausschließlich die Einzelheit X anhand besonders sinnvoller Formschlussausprägungen in Verbesserung des Grundprinzips nach der Fig. 1,
Fig. 2 eine zweite Ausführungsform mit trommelinnen von radial innen nach radial auswärts gerichteter Deformationszone X an der Befestigungskomponente 2 zwecks Fixierung,
Fig. 3 + 3a Einzelheit betreffend eine dritte Ausführungsform jedoch mit Bestimmung für eine radial einwärts gerichtet aufgeprägte Deformationszone X/Umformprozess so dass eine radial einwärts gerichtet vorgesehene, und nach radial auswärts offen gestaltete Kavität (bspw. Scheibenfräsernut 10,10',10") zur Anlage als Hinterschneidung an einer der Komponenten 2,4 vorliegt,
Fig. 4 + 4a eine alternative Ausführungsform etwa vergleichbar mit Fig. 3, jedoch in Ausprägung als radial einwärts gerichtet abgebohrte Kavität (Sackloch 11,11",11") an einem Bundende einer der Komponenten 2,4,
Fig. 5 teilweise ein prinzipieller Halbschnitt in Ausprägung als erfindungsgemäße Verbundbremstrommel 1 mit einer radial einwärts gerichtet verdeutlichten Deformationszone X infolge Werkzeug 12 in Verbindung mit einer keil- bzw. V-förmig gestalteten Nut 13/Kavität als Hinterschneidung in der Reibringkomponente 4,
Fig. 6 eine Ausführungsform wie in Fig. 5 jedoch mit einer abgewandelten Nut 13/Kavität in einer Reibringkomponente 4 (vgl. Rechtecknutquerschnitt) ,
Fig. 7 + 7a weiterhin abgewandelte Ausführungsform einer Nut 13/Kavität mit Wellenprofilierung im Nutgrund / Nutboden an einer Reibringkomponente 4 infolge einer radial einwärtsgerichtet, sowie variierter, Einstichtiefe a, b, und
Fig. 8 eine kombinatorische Ausführungsform mit doppelseitig von radial in und von radial außen gerichtet aufgeprägter Deformationszone an einer Befestigungskomponente 2.

Laut DE 10 2019 200 261.7 verfügt eine Verbundbremstrommel über eine gegebene Komponententeilung mit radial gerichteter Fuge 21 mit einer Fügeschnittstelle, die in Relation zu einer Flanschebene FE weitgehend radial fluchtend platziert vorgesehen ist. Die Paarung der Schnittstelle zwischen Befestigungskomponente 2 und Reibringkomponente 4 kann für eine exakte Rundlaufgenauigkeit einen präzise Presspassungsverbund 7 aufweisen. Als Montagehilfe im Bereich dieser Passung kann zwischen den Komponenten 2, 4 zudem beispielhaft eine Fase, Kantenabrundung, Einführschrägenprofilierung oder ähnliches mehr vorgesehen sein. Die gegebene Konstellation dieser Schnittstelle kann derart sein, dass die Werkstoffpaarung einen thermoaktiven Kühlwerkstoff wie insbesondere Leichtmetall (vorzugsweise Aluminiumstrangpressprofilwerkstoff oder Aluminiumschmiedewerkstoff) für die Ausbildung der Befestigungskomponente 2, und ein Eisenwerkstoff wie beispielsweise Graugusswerkstoff (z.B. Kugelgrafitgusswerkstoff) oder Stahlgusswerkstoff für die Ausbildung der Reibringkomponente 4 beinhaltet. Im Übrigen ermöglicht die offenbarte Werkstoffkonfiguration und Geometrie dem Presspassungsverbund 7, dass sich dieser ungehemmt nach radial auswärts gerichtet ausdehnt und sich die Tragfähigkeit des Presspassungsverbundes gleichzeitig mit zunehmender radial gerichteter Temperaturausdehnung der Befestigungskomponente 2 selbsttätig erhöht.

Weitere Einzelheiten einer entsprechenden Fuge bzw. abgestufte Schnittstelle zwischen Befestigungskomponente 2 und Reibringkomponente 4 sind der per Referenz hiermit einbezogenen Anmeldeunterlage, wie insbesondere Figurenbeschreibung laut DE 10 2019 200 261.7 zu entnehmen. Die vorliegende Erfindung erstreckt sich weiterhin grundsätzlich auf topfförmige Bremsrotoren, so dass prinzipiell auch eine Gestaltung als Verbundbremsscheibe denkbar und mit einbezogen ist, ohne die Erfindung zu verlassen. In der Folge werden die konstruktiven Besonderheiten der vorliegenden Erfindung konzentriert abgehandelt.

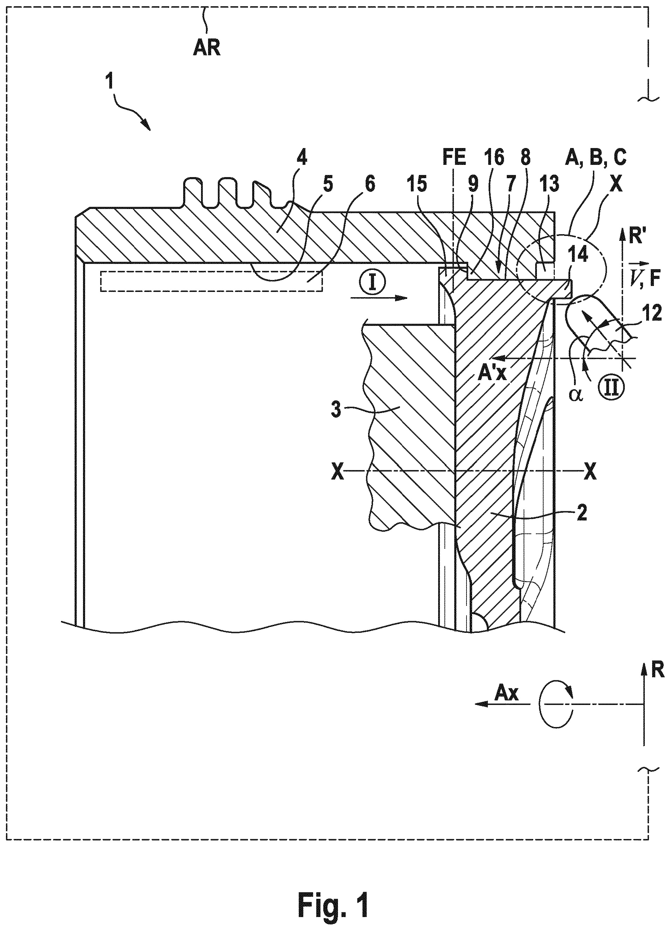

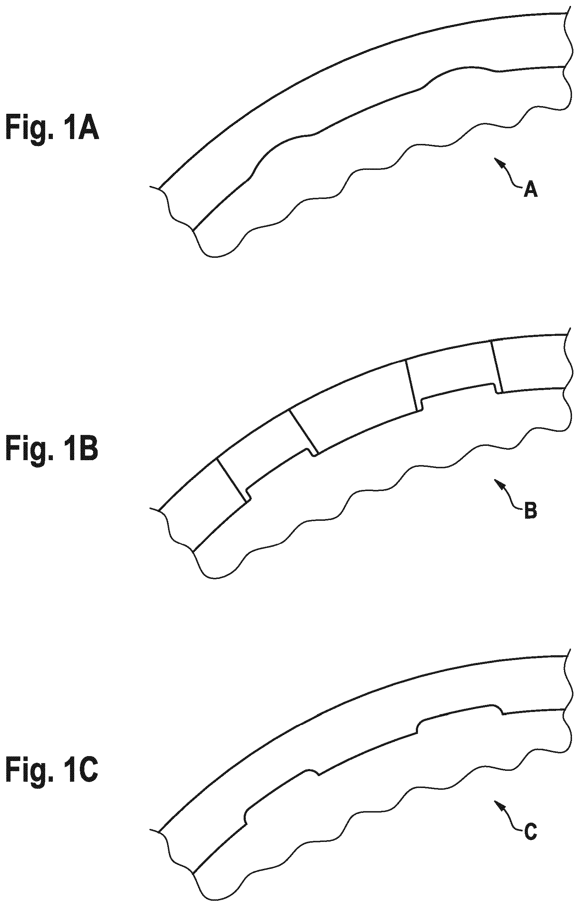

Gemäß Fig. 1 ist eine kreisscheibenförmige Befestigungskomponente 2 an Ihrem Umfang gestuft also einerseits mit einem axial ausgerichteten Absatz bzw. Haltebund 15 ausgebildet, und an deren rechter Stirnseite ist in axialer Verlängerung ein Werkstoffreservoir/depot 14 in Ausprägung als umlaufender Ringvorsprung vorgesehen. Dabei dient dies Werkstoffdepot 14 des Ringvorsprungs gemäß gestrichelter Andeutung in der Fig. 1 zur Ausbildung eines gegenseitigen Fixiermittels/Deformationszone X gemäß nachfolgender Beschreibung. Zwischen den genannten Komponenten 2,4 liegt einerseits anhand der kreiszylindrischen Fuge 8 ein gefügter Presspassungsverbund 7 mit gegebener Flächenpressung als Drehsperre vor. Denn die Befestigungskomponente 2 ist ersichtlich in Pfeilrichtung axial gerichtet in das innere der Reibringkomponente 4 derart axial eingefügt bis der Absatz/Haltebund 15 einerseits zum formschlüssigen Anschlag an den zugeordneten Anschlag 16 gelangt. Der Presspassungsverbund 7 in der Fuge 8 übernimmt zu diesem Zeitpunkt eine relative Drehsperrfunktion/Drehmomentübertragung in der Paarung zwischen Befestigungskomponente 2 und Reibringkomponente 4 (vorläufige Axialfixierung infolge formschlüssigem Hinterschnitt mit Axialanschlag links). Wie weiterhin aus Fig. 1 erhellt, ist zur weitergehenden Axialfixierung (rechter Anschlag) an der rechten Stirnseite der Reibringkomponente 4 eine Kavität/Nut 13 vorgesehen. Die Kavität 13 dient zur endgültigen Fixierung indem eine radial auswärts gerichtete plastische Deformation bzw. umformtechnische Verstemmung/Prägung (siehe Werkzeug 12, Druckstempel bzw. Drückrolle) auf das Werkstoffdepot 14 des Ringvorsprungs ausgeübt wird. Durch den derart gebildeten Übergriff/Formschluss/Hinterschnitt wird die Fixierung komplettiert, und demzufolge verhindert, dass sich die Befestigungskomponente 2 in umgekehrte Pfeilrichtung I (also in der Fig. 1 nach links) aus der Reibringkomponente 4 herausschieben lässt. Demzufolge gewährleistet ein erfindungsgemäßer Verbundbremstrommel 1 stets eine ausdrückliche Arbeitsteilung zwischen der Drehhemmungsfunktion einerseits und der Fixierungsfunktion andererseits, indem der Presspassungsverbund 7 im Wesentlichen ausschließlich die Drehsperrfunktion zwischen den Komponenten 2,4 übernimmt, und wobei die formschlüssige Fixierung mit gegenseitigem Übergriff im Wesentlichen Ausschließlich zur gegenseitigen Axialsicherung dient.

Im Herstellungsprozess darf das Bremsrotorrohteil/Werkstück über einen eigenständig steuer- bzw. regelbaren, sowie feststellbaren, Rotationsantrieb verfügen, welcher in gegenseitiger Synchronisierung mit einer gegebenen Taktzeit bzw. in Koordination mit einem Vorschub/Werkzeugverschiebung /Arbeitsbewegung 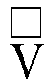 des Werkzeugs 12) eine Verdrehbarkeit, Verstellbarkeit, bzw. Feststellbarkeit und/oder Lagerung eines eingespannten Rohteils in einem Arbeitsraum AR gewährleisten kann. Für dieses Beispiel darf beispielhaft als Werkzeug 12 eine frei drehbar gelagerte Drückrolle bzw. ein einfacher Pressstempel ausreichen, welche/r demzufolge im Wesentlichen ausschließlich im Arbeitsraum AR die definiert gerichtete, sowie kontrollierte, Zustell- bzw.

Umformbewequnq in Richtung Vektor 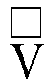 ausführt. Dies darf einen räumlich definierten Anstellwinkel α beinhalten. In Vereinfachung der Fertigungstechnologie beim Rollieren ist es jedoch grundsätzlich auch möglich, dass das Rohteil/Werkstück frei drehbar sowie im Übrigen fest gelagert im Arbeitsraum AR aufgespannt ist, und wobei eine drehangetriebene Drückrolle als Werkzeug 12 derart auf das Werkstück einwirkt, so dass dies drehangetriebene Werkzeug 12 die seine Drehantriebsenergie zwecks Werkstückverdrehung auf das Rohteil/Werkstück mitüberträgt.

Für den Fall besonders hoher Bremsmomente, die eine Flächenpressung des Pressverbunds 7 des Bremstrommels 1 überlasten würden kann zwecks gesonderter und zusätzlicher Absicherung noch eine formschlüssig definierte, sekundäre, Zusatzmaßnahme vorgesehen sein. Anhand der Teilansichten auf die beispielhaft dargelegten Profileinzelheiten entsprechend Teilfigur A,B,C in Fig. 1 erhellt beispielhaft eine derart nachgeordnete und separierte formschlüssige Drehsperre in der Radialrichtung R anhand der intermittierend am Umfang angeordneten Deformationszonen X entlang der axialen Stirnfläche, gemeinsam mit radial gerichtet eingreifenden Profilierungszonen. Dabei ist die Ausführungsform B mit Nockenvorsprüngen die nach radial außen gerichtet in Kavitäten der Reibringkomponente 4 eingreifen ganz besonders bevorzugt.

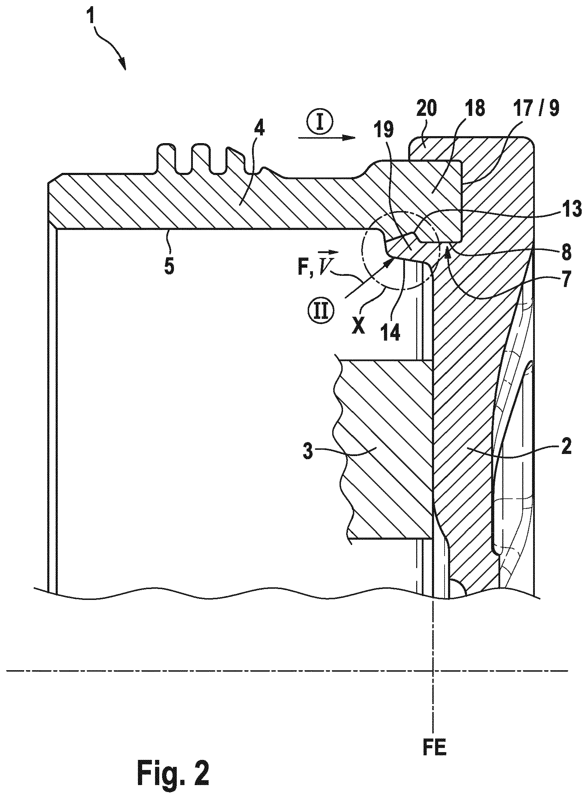

Im Folgenden wird auf die Unterschiede laut Ausführungsform gemäß Figur 2 näher eingegangen. Die Befestigungskomponente 2 verfügt in diesem Zusammenhang über eine einseitig nämlich links offen gestaltete d.h. in Einschubrichtung (vgl. Einschubprozess in Pfeilrichtung I d.h. umgekehrt zur Axialrichtung Ax) nach axial außen gerichtet gestaltete Ringnutaufnahme mit Nutgrundauflage 17 für einen Bund 18 und mit radial innerem sowie radial äußerem Ringstutzen 19,20. Demgegenüber verfügt die Reibringkomponente 4 an Ihrem Einschubende zwecks Kupplung mit der Befestigungskomponente 2 über den verdickt gestalteten Bund 18 (im Schnitt beispielhaft mit Rechteckquerschnitt). Der Bund 18 ist radial innen mit einer v-förmig gestalteten Kavität 13 versehen, welche in entsprechend planmäßiger Koordination mit der später eingebrachten Deformationszone X (Prozessschritt II) in gleichmäßiger Teilung intermittierend oder beispielhaft als ringförmig umlaufend arrangierte Nut vorgesehen sein kann. Gegenüberliegend zu dieser Kavität 13 verfügt die Befestigungskomponente 2 über eine radial auswärts gerichtet verdrängte Deformationszone X, so dass mit dem Verfahrensschritt II das Material des Werkstoffreservoir 14 formschlüssig in die Kavität bzw. Nut 13 des gebildeten Hinterschnitts hineinfliesst/verdrängt wird/eingeprägt wird. Dabei darf die Deformationszone X am Rohteil der Befestigungskomponente 2 beispielhaft als ringförmig umlaufender Ringstutzen 19 ausgebildet sein, wie dies in Fig. 2 gestrichelt angedeutet ist. Es bleibt zu bemerken, dass der radial innere Ringstutzen 19 in Axialrichtung Ax vergleichsweise mit größerer axialer Bundüberdeckung ausgeführt sein kann, als der radial außen allokierte Ringstutzen 20.

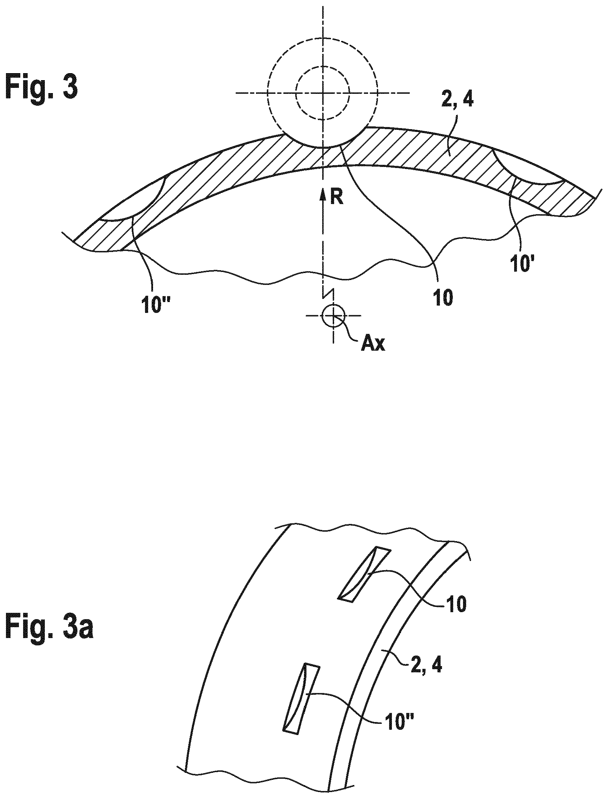

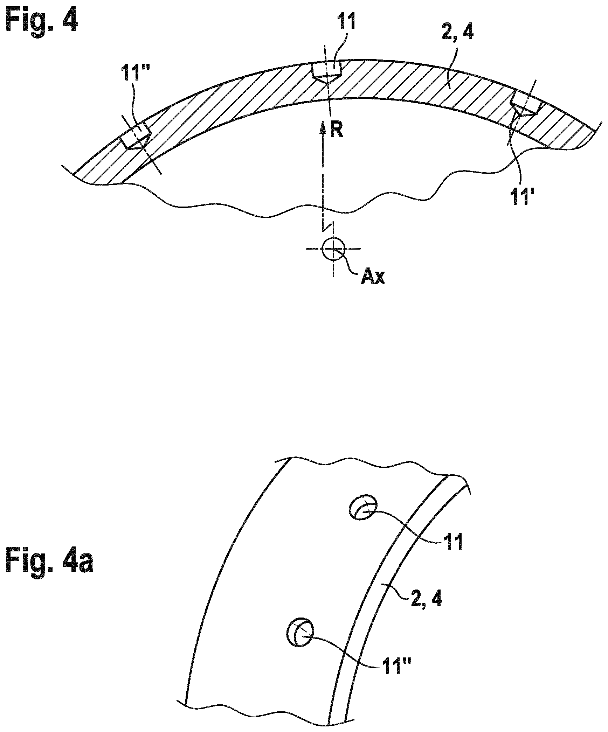

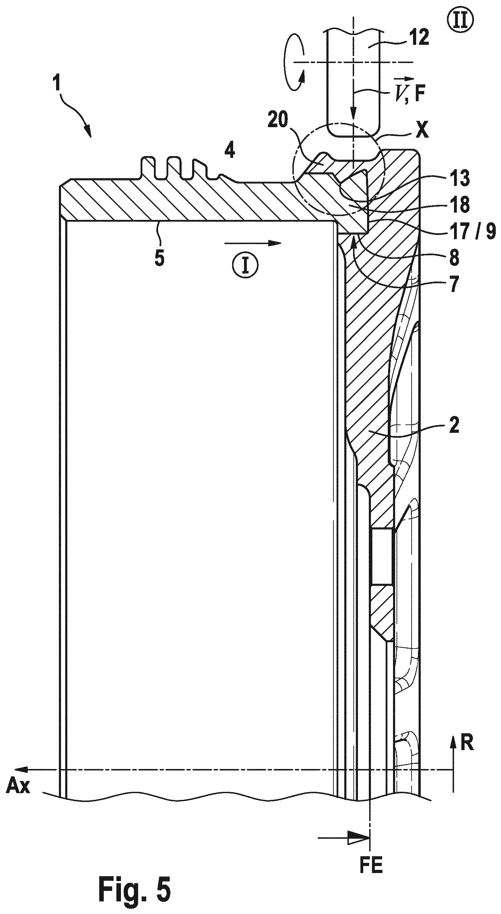

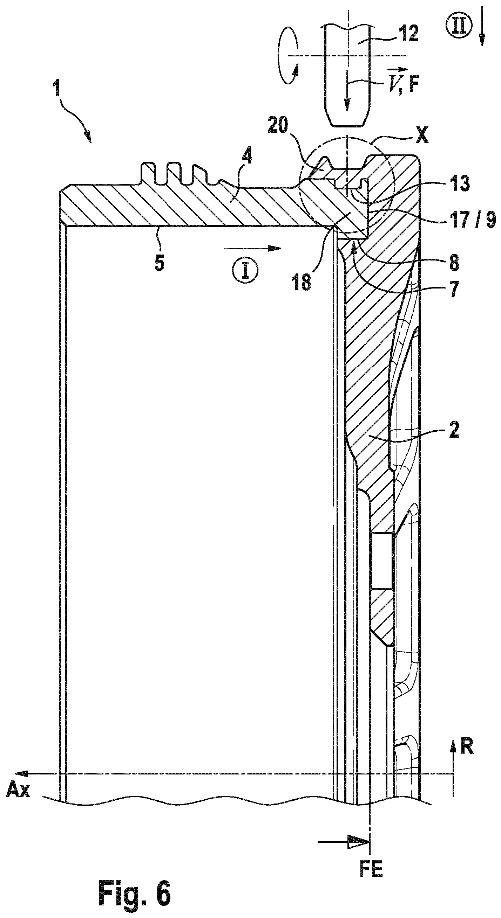

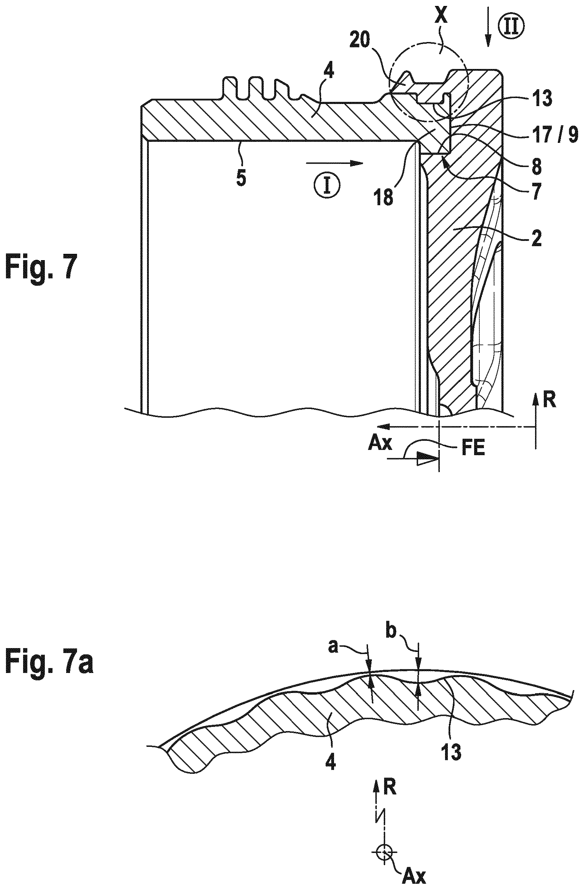

Nachstehend wird bei grundsätzlicher Übereinstimmung mit der vorhergehenden Beschreibung und bei weitgehender Merkmalsübereinstimmung zur Rationalisierung im Wesentlichen nur noch auf die maßgeblichen technischen Unterschiede der Varianten nach Figur 3 - Figur 6 näher eingegangen. Alle Varianten basieren dabei auf einem zeitlich nachgeschalteten Umformfügeprozess II welcher von radial außen nach radial innen gerichtet vorgesehen wird, nachdem die vorläufige Paarung I mit dem Presspassungsverbund 7 dargestellt worden ist. Dabei wird die Befestigungskomponente 2 prinzipiell von radial außen nach radial innen gedrückt, rolliert oder sonst wie umformtechnisch deformiert. Die gezeigten Varianten unterscheiden sich primär durch die konkrete Ausformulierung der Komponentenschnittstelle bzw. die Form ihrer Kavität. Fig. 3 + 3a verdeutlicht Einzelheiten einer dritten Variante die bei radial einwärts gerichtetem Umformprozess II eine radial einwärts gerichtet an einem Bundende einer zylindrischen Reibringkomponente 4 von radial auswärts nach radial einwärts gerichtet eingebrachte Kavität in Gestalt einer Scheibenfräsernut 10,10',10" in Mondsichelform beinhaltet. Dementsprechend verdeutlich die Fig. 4 - Fig. 4a eine ähnliche Variante jedoch anhand einer zylindrischen Sacklochbohrung 11,11',11". Die Variante nach Fig. 5 verfügt über einen L-förmig abgekröpften Bund 18 und wobei eine Kavität 13 am radial äußeren Umfang des Bundes 18 vorzugsweise an dessen Umfang als Nut 13 umlaufend arrangiert ist. Dementsprechend ist die Deformationszone X der Befestigungskomponente 2 am Außenumfang der Befestigungskomponente 2 sowie nach radial innen gerichtet arrangiert. Die Variante der Kavität 13 nach Fig. 6 unterscheidet von Fig. 5 indem der Querschnitt der Kavität als Rechteck gestaltet ist. Die Fig. 7 stimmt im Wesentlichen mit der Kavität nach Fig. 6 prinzipiell überein mit der Maßgabe, dass eine radiale Einstichtiefe zwischen den zwei verdeutlichten Extremwerten a, b variiert ist. Die Variation kann demzufolge über den Umfang wellenförmig oder auch abgestuft vorliegen, wie dies ganz grundsätzlich vergleichbar aus der Fig. 1 erhellt. Durch diese Maßnahme kann eine erhöhte Sicherheit bewirkt bzw. gesteigerte Bremsdrehmomente übertragen werden.

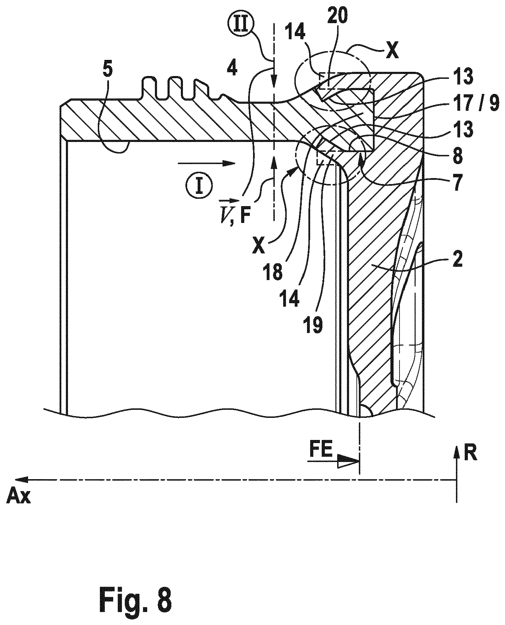

Schließlich verdeutlicht die Fig. 8 eine kombinatorische Deformationsvariante umfassend eine sowohl radial einwärts und auch radial auswärts ausgerichteter Deformationszone X an der Befestigungskomponente 2, und wobei die Kavität 13 zur Verstärkung der gebildeten formschlüssigen Hinterschneidung doppelseitig sowie weitestgehend spiegelbildlich angebracht sein kann.

Es versteht sich schließlich, dass sämtliche offenbarten Merkmale, Ausführungen und Varianten laut Anmeldeunterlage in mannigfacher sowie beliebiger Variation miteinander beliebig kombinierbar sind, ohne den Grundsatz einer Aufgabentrennung/Aufgabensplittung zwischen Fixierungsfunktion und Momentenübertragungsfunktion zwischen den Komponenten 2,4 laut der vorliegenden Erfindung zu verlassen.
1 Verbundbremstrommel
2 Befestigungskomponente
3 Radnabe
4 Reibringkomponente
5 Reibfläche
6 Reibbelag
7 Presspassungsverbund
8 Fuge (axialgerichtet)
9 Fuge (radialgerichtet)
10, 10', 10" Scheibenfräsernut
11, 11', 11" Sackloch
12 Werkzeug
13 Kavität
14 Werkstoffreservoir (Nut)
15 Haltebund
16 Anschlag
17 Nutgrund(auflage)
18 Bund
19 Ringstutzen
20 Ringstutzen
FE Flanschebene
AR Arbeitsraum
Ax Axialrichtung
R Radialrichtung
F Kraft
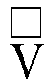 Arbeitsbewegung, Vorschub
α (Anstell-)Winkel
I,II Prozessschritt
a,b Einstichtiefe (Extremwerte)
X Deformationszone

## Patentansprüche

1. Topfförmige Verbundbremstrommel (1) für Kraftfahrzeuge, die mindestens eine Befestigungskomponente (2) als Nabenschnittstelle mit mindestens einer Reibringkomponente (4) als Reibpartner für mindestens einen Reibbelag (6) miteinander kombiniert, in Konfektionierung als mehrstückig aufgebaute Verbundbremstrommel, wobei die Komponenten (2,4) eine wärmeleitfähige Fügeschnittstelle (8) aufweisen, und koaxial zueinander sowie drehfest in Axialrichtung Ax derart zusammengefügt sind, so dass die Befestigungskomponente (2) als Wärmesenke für die Reibringkomponente (4) dient, wobei zwischen den Komponenten (2,4) gesondert mindestens ein Fixiermittel vorliegt, und dies Fixiermittel im Wesentlichen ausschließlich eine Fixierfunktion in Axialrichtung Ax durch gegenseitigen Formschluss zwischen den Komponenten (2,4) anhand radial gerichtetem Übergriff von mindestens einer Hinterschneidung wahrnimmt, und wobei zur Drehmomentübertragung zwischen Befestigungskomponente (2) und Reibringkomponente (4) gesondert ein Presspassungsverbund (7) vorgesehen ist.

2. Topfförmige Verbundbremstrommel (1) für Kraftfahrzeuge nach Anspruch 1,
**dadurch gekennzeichnet, dass** neben dem Presspassungsverbund (7) eine Formschlussverbindung zwischen den gepaarten Komponenten derart vorliegt, so dass das Fixiermittel über mindestens eine integrale Deformationszone X verfügt, und die Reibringkomponente (4) über mindestens eine integrierte Kavität (13) verfügt, wobei die Kavität (13) zur Werkstoffaufnahme von verdrängtem Werkstoff aus einem Werkstoffdepot (14) in einer Deformationszone X dient, und/oder umgekehrt.

3. Topfförmige Verbundbremstrommel (1) für Kraftfahrzeuge nach einem oder mehreren der Ansprüche 1-2, **dadurch gekennzeichnet, dass** eine Reibringkomponente (4) mit mindestens einer Kavität (13) versehen ist, und dass eine Fuge (8,9) etwa in radialer Flucht mit einer Flanschebene (FE) vorgesehen ist.

4. Herstellverfahren für eine topfförmige Verbundbremstrommel (1) nach einem oder mehreren der vorhergehenden Ansprüche 1 - 3, die aus einer Befestigungskomponente (2) und einer Reibringkomponente (4) drehfest zusammengesetzt ist, **dadurch gekennzeichnet, dass** die Komponenten (2,4) mit Hilfe von wenigstens einem gegenseitigen Presspassungsverbund (7) drehfest derart zusammengesetzt sind, so dass die Komponenten (2,4) in einem primären Schritt (I) aneinander kraftschlüssig gefügt vormontiert sind, und dass gesondert mit Hilfe von wenigstens einem zeitlich nachgeordneten Umformfügeprozess in einem sekundär anschließenden Prozessschritt II eine gesonderte, formschlüssig ausgeführte Fixierung der gepaarten Komponenten aneinander mit Hilfe von wenigstens einer Umformmaßnahme umfassend eine Deformationszone X, durch Umformung von einer und/oder mehrerer der Komponenten (2,4), ausgeführt wird.

5. Herstellverfahren für eine topfförmige Verbundbremstrommel (1) nach Anspruch 4, **dadurch gekennzeichnet, dass** der Presspassungsverbund (7) durch axial relativ zueinander gerichtetes Einpressen von einer oder mehrerer Komponenten (2,4) vorgenommen wird, um eine zumindest geringfügige formschlüssige gegenseitige Axialüberdeckung zu erreichen, und wobei der nachfolgende Umformfügeprozess II durch mindestens eine in einem Arbeitsraum AR quer zur Axialrichtung Ax gerichtet ausgeführte Deformation erfolgt, um gesondert dazu eine formschlüssig gefügte Hinterschneidung auszubilden.

6. Herstellverfahren für eine topfförmige Verbundbremstrommel (1) nach Anspruch 4 oder 5, **dadurch gekennzeichnet, dass** der gesonderte Umformfügeprozess zumindest eine örtlich begrenzte, wie insbesondere eine intermittierend mit Versatz am Umfang wiederholt ausgeführte, und/oder ringförmig umlaufend ausgeführte Deformationszone X beinhaltet.

7. Herstellverfahren für eine topfförmige Verbundbremstrommel (1) nach einem oder mehreren der vorhergehenden Ansprüche 4 - 6, **dadurch gekennzeichnet, dass** die Umformmaßnahme als Kaltumformprozess ausgestaltet ist.

8. Herstellverfahren für eine topfförmige Verbundbremstrommel (1) nach einem oder mehreren der vorhergehenden Ansprüche 4 - 7, **dadurch gekennzeichnet, dass** der Umformfügeprozess einen Drück- und/oder Rollierverfahrensschritt (II) beinhaltet, indem ein Werkzeug (12) in einem Arbeitsraum AR mit definierter Kraft F mit Arbeitsbewegung 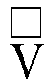 in Richtung auf ein drehangetriebenes Werkstück zugestellt wird, und/oder umgekehrt.

9. Herstellverfahren für eine topfförmige Verbundbremstrommel (1) nach einem oder mehreren der vorhergehenden Ansprüche 4 - 8, **dadurch gekennzeichnet, dass** das Werkstück in einem Arbeitsraum AR parallel zur Axialrichtung Ax über eine gegeben definierte, zentral arrangierte Antriebsdrehachse zwecks Drehverstellung verfügt, und dass ein Werkzeug (12) wie insbesondere ein Stempel, und/oder Drückwerkzeug und/oder Rollierwerkzeug (12) in Relation dazu mit definiertem Raumwinkel α, in Relation zu der Drehachse definiert räumlich ausrichtbar, in dem Arbeitsraum AR beliebig verfahrbar, also bewegbar geführt gelagert, angeordnet ist.

10. Herstellverfahren für eine topfförmige Verbundbremstrommel (1) nach einem oder mehreren der vorhergehenden Ansprüche 4 - 9, **dadurch gekennzeichnet, dass** die Ausbildung der Deformationszone X einen sekundären Arbeitsschritt II beinhaltet, wobei ein Werkzeug (12), insbesondere ein Stempel, und/oder Drückwerkzeug und/oder Rollierwerkzeug in einem Arbeitsraum AR mit einer räumlich definiert gerichteten Arbeitsbewegung 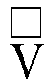 und aufweisend eine definierte Umformkraft F auf eine oder mehrere der Komponenten (2,4) einwirkt.

11. Herstellverfahren für eine topfförmige Verbundbremstrommel (1) nach einem oder mehreren der vorhergehenden Ansprüche 4 - 10, **dadurch gekennzeichnet, dass** der Umformfügeprozess zwecks Ausprägung der Deformationszone X bei stehendem Werkzeug (12) umgekehrt ausgebildet ist, indem das Werkzeug (12) räumlich fest im Arbeitsraum AR gelagert ist, und wobei das Rohteil/Werkstück in Relation zu dem Werkzeug (12) definiert im Arbeitsraum AR bewegbar sowie feststellbar gelagert geführt ist, und die Vorschubbewegung 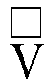 mit definierter Kraft F koordiniert von dem Rohteil/Werkstück ausgeführt wird.

12. Herstellverfahren für eine topfförmige Verbundbremstrommel (1) nach einem oder mehreren der vorhergehenden Ansprüche 4 - 11, **dadurch gekennzeichnet, dass** das Herstellverfahren elektronisch mikroprozessorgesteuert gesteuert ist, indem die Drehverstellung und/oder die Werkzeugbewegung bei gegebener Taktzeit und/oder Taktfrequenz geregelt sind.

13. Herstellverfahren für eine topfförmige Verbundbremstrommel (1) nach Anspruch 12, **dadurch gekennzeichnet, dass** die Einzelheiten der Drehverstellung und die Einzelheiten der Werkzeugbewegung gegenseitig aufeinander abgestimmt, wie insbesondere zueinander durch die gegebene Taktzeit und/oder Taktfrequenz synchronisiert geregelt sind.

14. Herstellverfahren für eine topfförmige Verbundbremstrommel (1) nach Anspruch 4 - 13, **dadurch gekennzeichnet, dass** die Verbundbremstrommel (1) eine Umformmaßnahme mit Deformationszone X
a) in Radialrichtung R gerichtet von radial innen nach radial außen am Verbundbremstrommel (1) aufweist, oder
b) die Deformationszone X in Radialrichtung R gerichtet von radial außen nach radial innen gerichtet an der Verbundbremstrommel (1) vorliegt, oder
c) dass eine summarische Merkmalskombination sämtlicher Merkmale bei Kombination von a) mit b) an der Verbundbremstrommel (1) vorliegt.

15. Topfförmige Verbundbremstrommel (1 nach einem oder mehreren der vorhergehenden Ansprüche 1 - 3, **dadurch gekennzeichnet, dass** die Verbundbremstrommel (1) eine Umformmaßnahme mit Deformationszone X
a) in Radialrichtung R gerichtet von radial innen nach radial außen am Verbundbremstrommel (1) aufweist, oder
b) die Deformationszone X in Radialrichtung R gerichtet von radial außen nach radial innen gerichtet an der Verbundbremstrommel (1) vorliegt, oder
c) dass eine summarische Merkmalskombination sämtlicher Merkmale bei Kombination von a) mit b) an der Verbundbremstrommel (1) vorliegt.

## Claims

1. Pot-shaped composite brake drum (1) for motor vehicles, which combines at least one securing component (2) as a hub interface with at least one friction ring component (4) as a friction partner for at least one friction lining (6), when assembled as a multipiece composite brake drum, wherein the components (2, 4) have a heat-conductive joint interface (8) and are joined together coaxially and rotationally fixedly in the axial direction Ax, such that the securing component (2) serves as a heat sink for the friction ring component (4), wherein at least one fixing means is provided separately between the components (2, 4), and this fixing means substantially exclusively performs a fixing function in the axial direction Ax by mutual form fit between the components (2, 4) by means of a radially directed engagement behind at least one undercut, and wherein a press-fit connection (7) is provided separately for torque transmission between the securing component (2) and the friction ring component (4).

2. Pot-shaped composite brake drum (1) for motor vehicles according to Claim 1, **characterized in that** in addition to the press-fit connection (7), a form-fit connection is present between the paired components such that the fixing means has at least one integral deformation zone X, and the friction ring component (4) has at least one integrated cavity (13), wherein the cavity (13) serves to receive material from material displaced from a material store (14) in a deformation zone X, and/or vice versa.

3. Pot-shaped composite brake drum (1) for motor vehicles according to one or a plurality of Claims 1-2, **characterized in that** a friction ring component (4) is provided with at least one cavity (13), and that a joint (8, 9) is provided approximately radially aligned with a flange plane (FE).

4. Manufacturing method for a pot-shaped composite brake drum (1) according to one or a plurality of preceding Claims 1 to 3, which is assembled rotationally fixedly from a securing component (2) and a friction ring component (4), **characterized in that** the components (2, 4) are assembled rotationally fixedly by means of at least one mutual press-fit connection (7) such that, in a primary step (I), the components (2, 4) are pre-mounted and joined together by force fit, and that separately by means of at least one temporally subsequent forming joining process, in a secondary subsequent process step II, a separate form-fit fixing of the paired components to one another is created by means of at least one forming measure comprising a deformation zone X, by forming of one and/or more of the components (2, 4).

5. Manufacturing method for a pot-shaped composite brake drum (1) according to Claim 4, **characterized in that** the press-fit connection (7) is created by pressing in one or more components (2, 4) axially relative to one another, in order to achieve an at least slight form-fit mutual axial overlap, and wherein the subsequent forming joining process II takes place by at least a deformation directed transversely to the axial direction Ax in a working chamber AR, in order to form a separate form-fit joined undercut.

6. Manufacturing method for a pot-shaped composite brake drum (1) according to Claim 4 or 5, **characterized in that** the separate forming joining process includes at least one locally delimited deformation zone X, which in particular may be intermittently repeated with offset on the periphery and/or run peripherally in a ring.

7. Manufacturing method for a pot-shaped composite brake drum (1) according to one or a plurality of preceding Claims 4 to 6, **characterized in that** the forming measure is configured as a cold-forming process.

8. Manufacturing method for a pot-shaped composite brake drum (1) according to one or a plurality of preceding Claims 4 to 7, **characterized in that** the forming joining process includes a pressing and/or rolling method step (II), in which a tool (12) in a working chamber AR is brought with defined force F in a working movement *̅V̅*̅ in the direction of a rotationally driven workpiece, and/or vice versa.

9. Manufacturing method for a pot-shaped composite brake drum (1) according to one or a plurality of preceding Claims 4 to 8, **characterized in that** in a working chamber AR parallel to the axial direction Ax, the workpiece has a given, defined, centrally arranged drive rotation axis for rotational adjustment, and that a tool (12) such as in particular a punch and/or a pressing tool and/or a rolling tool (12) is arranged with defined spatial angle α relative thereto, so as to be definedly physically orientable relative to the rotational axis and movable arbitrarily in the working chamber AR, i.e. mounted so as to be movably guided.

10. Manufacturing method for a pot-shaped composite brake drum (1) according to one or a plurality of preceding Claims 4 to 9, **characterized in that** the formation of the deformation zone X contains a secondary working step II, wherein a tool (12), in particular a punch and/or a pressing tool and/or a rolling tool, acts on one or a plurality of the components (2, 4) in a working chamber AR with a physically definedly oriented working movement *V̅* and having a defined forming force F.

11. Manufacturing method for a pot-shaped composite brake drum (1) according to one or a plurality of preceding Claims 4 to 10, **characterized in that** for the purpose of enhancing the deformation zone X, the forming joining process is reversed with the tool (12) stationary, wherein the tool (12) is mounted physically fixedly in the working chamber AR and wherein the blank/workpiece is guided so as to be definedly movable and fixably mounted in relation to the tool (12) in the working chamber AR, and the advance movement V is executed with defined force F with coordination of the blank/workpiece.

12. Manufacturing method for a pot-shaped composite brake drum (1) according to one or a plurality of preceding Claims 4 to 11, **characterized in that** the manufacturing method is electronically controlled by microprocessor, **in that** the rotational adjustment and/or the tool movement is regulated with a given cycle time and/or cycle frequency.

13. Manufacturing method for a pot-shaped composite brake drum (1) according to Claim 12, **characterized in that** the details of the rotational adjustment and the details of the tool movement are mutually matched, such as in particular regulated in mutual synchrony by the given cycle time and/or cycle frequency.

14. Manufacturing method for a pot-shaped composite brake drum (1) according to Claims 4 to 13, **characterized in that** the composite brake drum (1) has a deformation measure with deformation zone X
a) in the radial direction **R,** directed from radially inward to radially outward, on the composite brake drum (1), or
b) the deformation zone X is present in the radial direction **R,** directed from radially outward to radially inward, on the composite brake drum (1), or
c) that a summary feature combination of all features in the combination of a) with b) is present on the composite brake drum (1).

15. Pot-shaped composite brake drum (1) according to one or a plurality of preceding Claims 1 to 3, **characterized in that** the composite brake drum (1) has a deformation measure with deformation zone X
a) in the radial direction **R,** directed from radially inward to radially outward, on the composite brake drum (1), or
b) the deformation zone X is present in the radial direction **R,** directed from radially outward to radially inward, on the composite brake drum (1), or
c) that a summary feature combination of all features in the combination of a) with b) is present on the composite brake drum (1).

## Revendications

1. Tambour de frein composite (1) en forme de pot pour des véhicules à moteur, qui combine entre eux au moins un composant de fixation (2) en tant qu'interface de moyeu à au moins un composant de bague de friction (4) en tant que partenaire de friction pour au moins une garniture de friction (6) lors de la production en tant que tambour de frein composite élaboré en plusieurs parties, les composants (2, 4) comportant une interface d'assemblage (8) thermoconductrice et étant regroupés coaxialement l'un par rapport à l'autre et de manière solidaire en rotation dans la direction axiale Ax de telle manière que le composant de fixation (2) fait office de dissipateur thermique pour le composant de bague de friction (4), au moins un moyen de blocage étant présent, séparément, entre les composants (2, 4) et ledit moyen de blocage percevant sensiblement exclusivement une fonction de blocage dans la direction axiale Ax par une complémentarité de forme mutuelle entre les composants (2, 4) à l'aide d'un empiètement dirigé radialement sur au moins une contre-dépouille et un composite à ajustement serré (7) étant prévu, séparément, pour transmettre un couple de rotation entre le composant de fixation (2) et le composant de bague de friction (4).

2. Tambour de frein composite (1) en forme de pot pour des véhicules à moteur selon la revendication 1, **caractérisé en ce qu'**est présente, outre le composite à ajustement serré (7), une liaison à complémentarité de forme entre les composants jumelés de telle manière que le moyen de blocage dispose d'au moins une zone de déformation intégrale X, et que le composant de bague de friction (4) dispose d'au moins une cavité (13) intégrée, la cavité (13) servant à recevoir un matériau refoulé provenant d'un dépôt (14) de matériau dans une zone de déformation X, et/ou inversement.

3. Tambour de frein composite (1) en forme de pot pour des véhicules à moteur selon l'une ou plusieurs des revendications 1 - 2, **caractérisé en ce qu'**un composant de bague de friction (4) est pourvu d'au moins une cavité (13) et qu'un joint (8, 9) est prévu à peu près de manière alignée radialement avec un plan de bride (FE).

4. Procédé de fabrication pour un tambour de frein composite (1) en forme de pot selon l'une ou plusieurs des revendications 1 - 3, qui se compose de manière solidaire en rotation d'un composant de fixation (2) et d'un composant de bague de friction (4), **caractérisé en ce que** les composants (2, 4) sont composés de manière solidaire en rotation à l'aide d'au moins un composite à ajustement serré (7) mutuel de telle manière que les composants (2, 4) sont prémontés de manière assemblée l'un sur l'autre à force dans une étape primaire (I) et qu'un blocage séparé exécuté par complémentarité de forme des composants jumelés l'un sur l'autre à l'aide d'au moins une mesure de façonnage comprenant une zone de déformation X, par façonnage d'un et/ou de plusieurs des composants (2, 4) est exécuté de manière séparée à l'aide d'au moins un processus d'assemblage par façonnage qui fait suite dans le temps dans une étape de processus II secondaire consécutive.

5. Procédé de fabrication pour un tambour de frein composite (1) en forme de pot selon la revendication 4, **caractérisé en ce que** le composite à ajustement serré (7) est réalisé par un ou plusieurs composants (2, 4) par un enfoncement dirigé l'un par rapport à l'autre axialement pour obtenir un recouvrement axial mutuel à complémentarité de forme au moins modéré, le processus d'assemblage par façonnage II qui suit étant effectué par au moins une déformation exécutée de manière dirigée transversalement par rapport à la direction axiale Ax dans un espace de travail AR pour réaliser, séparément, une contre-dépouille assemblée par complémentarité de forme.

6. Procédé de fabrication pour un tambour de frein composite (1) en forme de pot selon la revendication 4 ou 5, **caractérisé en ce que** le processus d'assemblage par façonnage séparé comporte au moins une zone de déformation X délimitée spatialement, par exemple en particulier exécutée de manière répétée par intermittence avec un décalage sur la périphérie et/ou exécutée en périphérie avec une forme annulaire.

7. Procédé de fabrication pour un tambour de frein composite (1) en forme de pot selon l'une ou plusieurs des revendications précédentes 4 - 6, **caractérisé en ce que** la mesure de façonnage est configurée en tant qu'un processus de façonnage à froid.

8. Procédé de fabrication pour un tambour de frein composite (1) en forme de pot selon l'une ou plusieurs des revendications précédentes 4 - 7, **caractérisé en ce que** le processus d'assemblage par façonnage comporte une étape de procédé de compression et/ou de roulage (II), **en ce qu'**un outil (12) est placé dans un espace de travail AR avec une force F définie avec un mouvement de travail V en direction d'une pièce entraînée en rotation, et/ou inversement.

9. Procédé de fabrication pour un tambour de frein composite (1) en forme de pot selon l'une ou plusieurs des revendications précédentes 4 - 8, **caractérisé en ce que** la pièce dispose dans un espace de travail AR parallèlement à la direction axiale Ax d'un axe de rotation d'entraînement donné, disposé au centre aux fins de l'ajustement en rotation, et qu'un outil (12), par exemple un poinçon, et/ou un outil de compression et/ou un outil de roulage (12) sont disposés de manière à pouvoir être orientés spatialement de manière définie en lien avec l'axe de rotation selon un angle spatial α défini, peuvent être déplacés au choix dans l'espace de travail AR, donc sont montés avec une possibilité de déplacement guidé.

10. Procédé de fabrication pour un tambour de frein composite (1) en forme de pot selon l'une ou plusieurs des revendications précédentes 4 - 9, **caractérisé en ce que** la réalisation de la zone de déformation X comporte une étape de travail secondaire II, un outil (12), en particulier un poinçon, et/ou un outil de compression et/ou un outil de roulage agissant sur un ou plusieurs des composants (2, 4) dans un espace spatial AR avec un mouvement de travail *̅V̅*̅ dirigé de manière définie spatialement et tout en présentant une force de façonnage F définie.

11. Procédé de fabrication pour un tambour de frein composite (1) en forme de pot selon l'une ou plusieurs des revendications précédentes 4 - 10, **caractérisé en ce que** le processus d'assemblage par façonnage est réalisé aux fins de l'empreinte de la zone de déformation X lorsque l'outil (12) est immobile, **en ce que** l'outil (12) est monté de manière solidaire spatialement dans l'espace de travail AR, et la partie brute/la pièce étant guidée tout en étant montée de manière mobile et immobilisable de manière définie dans l'espace de travail AR en lien avec l'outil (12) et le mouvement d'avance *̅V̅*̅ étant exécuté par la partie brute/la pièce de manière coordonnée avec une force F définie.

12. Procédé de fabrication pour un tambour de frein composite (1) en forme de pot selon l'une ou plusieurs des revendications précédentes 4 - 11, **caractérisé en ce que** le procédé de fabrication est commandé électroniquement par microprocesseur, **en ce que** l'ajustement en rotation et/ou le mouvement d'outil sont régulés à une durée et/ou à une fréquence de cadence données.

13. Procédé de fabrication pour un tambour de frein composite (1) en forme de pot selon la revendication 12, **caractérisé en ce que** les particularités de l'ajustement en rotation et les particularités du mouvement d'outil sont mutuellement adaptées les unes aux autres, en particulier sont régulées de manière synchronisée par la durée et/ou la fréquence de cadence données.

14. Procédé de fabrication pour un tambour de frein composite (1) en forme de pot selon les revendications 4 - 13, **caractérisé en ce que** le tambour de frein composite (1) présente une mesure de façonnage avec une zone de déformation X
a) sur le tambour de frein composite (1) de l'intérieur radialement vers l'extérieur radialement de manière dirigée dans la direction radiale R, ou
b) la zone de déformation X est présente sur le tambour de frein composite (1) de manière dirigée de l'extérieur radialement vers l'intérieur radialement de manière dirigée dans la direction radiale R, ou
c) **en ce qu'**une combinaison sommaire de caractéristiques de toutes les caractéristiques est présente lors de la combinaison de a) à b) sur le tambour de frein composite (1).

15. Tambour de frein composite (1) en forme de pot selon l'une ou plusieurs des caractéristiques précédentes 1 - 3, **caractérisé en ce que** le tambour de frein composite (1) présente une mesure de façonnage avec une zone de déformation X
a) sur le tambour de frein composite (1) de l'intérieur radialement vers l'extérieur radialement de manière dirigée dans la direction radiale R, ou
b) la zone de déformation X est présente sur le tambour de frein composite (1) de manière dirigée de l'extérieur radialement vers l'intérieur radialement de manière dirigée dans la direction radiale R, ou
c) **en ce qu'**une combinaison sommaire de caractéristiques de toutes les caractéristiques est présente lors de la combinaison de a) à b) sur le tambour de frein composite (1).
